# NEUE EUROPÄISCHE PATENTSCHRIFT

(11) **EP 2 047 739 B2**
(45) Veröffentlichungstag und Bekanntmachung des Hinweises auf die Entscheidung über den Einspruch: **24.02.2016**
(45) Hinweis auf die Patenterteilung: 12.01.2011
(21) Anmeldenummer: 08105221.9
(22) Anmeldetag: 03.09.2008
(51) Int. Cl.: A01D 78/06

(54) **Bandrechen**
Side-delivery hay rake
Râteau-faneur de bande

(30) Priorität: 12.10.2007 CH 15962007
(43) Veröffentlichungstag der Anmeldung: 15.04.2009
(73) Patentinhaber: Erni, Thomas, 6125 Menzberg (CH)
(72) Erfinder: Erni, Thomas, 6125 Menzberg (CH)
(74) Vertreter: TSWpat Luzern AG

(56) Entgegenhaltungen:
- CH-A- 392 969
- DE-A1- 1 482 806
- DE-A1- 2 927 297
- GB-A- 920 457
- GB-A- 1 118 682
- US-A- 2 694 895
- US-A- 2 896 388
- US-A- 4 300 337

## Beschreibung

Die vorliegende Erfindung betrifft eine Vorrichtung mit einem Frontbandrechen zum Bergen von Gras bzw. Futter gemäss dem Oberbegriff nach Anspruch 1.

Bandrechen dienen dazu, geschnittenes Gras, Heu resp. geschnittenes Futter zu bergen und seitlich in Längsbahnen aufzuhäufen.

Speziell in schwierigem Gelände wie an Hanglagen ist es ein Problem mit bestehenden Bandrechen das Gras bzw. Futter zu bergen, ohne Gefahr des Rutschens oder gar Kippens des Arbeitsgerätes, wie beispielsweise der Antriebslandmaschine zu laufen.

Eine Verbesserung der Stabilität bringt die Verwendung von Achsverbreiterungen. Je seitlich an die Laufräder der Antriebsmaschine, wie beispielsweise von einem Motormäher, werden Zusatzräder oder Walzen angeordnet.

Allerdings besteht bei Verwendung von Bandrechen nach wie vor die Problematik, dass das Gras jeweils nur auf eine Seite, wie beispielsweise hangabwärts einwandfrei aufgehäuft werden kann, währenddem bei Arbeitsweise in entgegengesetzter Richtung das Aufhäufen hangaufwärts problematisch ist.

Die Aufgabe der vorliegenden Erfindung besteht im Schaffen einer Landwirtschaftsmaschine, mittels welcher Futter bzw. Gras problemlos, dass heisst auch in schwierigem Gelände geborgen bzw. aufgehäuft werden kann. Erfindungsgemäss wird eine Vorrichtung gemäss dem Wortlaut nach Anspruch 1 vorgeschlagen.

Die vorgeschlagene Vorrichtung zum Bergen von Gras bzw. Futter weist ein, zur Bewegungsrichtung des Landwirtschaftsgerätes, wenigstens nahezu senkrecht angeordnet umlaufendes Band auf, mit auswärts vorstehenden Zinken, wobei das Band in beiden Richtungen bewegbar antreibbar ist. Mit anderen Worten ist das umlaufende Endlosband mit den Zinken sogenannt Rechts/Links antreibbar, dass heisst, das zu bergende Futter kann sowohl auf die linke Seite des Landwirtschaftsgerätes aufgehäuft werden, wie auch nach rechts. Die Bandebene ist gegenüber dem Untergrund in einem Winkelbereich von ca. 30° bis ca. 60° schwenkbar. In Betrieb beträgt der Winkel in der Regel vorzugsweise ca. 45°.

Aufgrund des Links/Rechts-Antriebes für das Band wird gemäss einer Ausführungsvariante vorgeschlagen, dass die Zinken im wesentlichen senkrecht vom Band nach aussen vorstehend angeordnet sind. Mit anderen Worten sind die Zinken im Gegensatz zu bekannten Bandrechen ungesteuert, dass heisst auch je im Bereich der seitlichen Umlenkung des Bandes stehen diese im Wesentlichen senkrecht nach aussen vor. Bei bekannten Bandrechen, bei welchen das Band jeweils nur in eine Richtung antreibbar ist, erfolgt jeweils im seitlichen Umlenkbereich eine Steuerung der Zinken derart, dass sie jeweils in Transportrichtung rückwärts angewinkelt zum Transportband verlaufen.

Der Antrieb des umlaufenden Antriebbandes erfolgt hydraulisch und die Steuerung für den Links/Rechts-Betrieb mittels einem hydraulisch betriebenen Elektroventil.

Damit kein Heu bzw. Futter in die Antriebsmaschine eingezogen werden kann, ist das Antriebsband beispielsweise durch eine Verschalung wie Kunststoffleisten überdeckt, durch welche das Futter abgewiesen wird. Diese Verschalung bzw. Kunststoffleiste ist mit entsprechenden Führungsschlitzen, für das Hindurchragen der Zinken versehen.

Wie üblicherweise verwendet sind die Zinken mindestens paarweise angeordnet.

Erfindungsgemäss ist der Bandrechen geeignet, um frontseitig an eine Antriebsmaschine, wie beispielsweise den Antrieb eines Motormähers, angeordnet zu werden. Selbstverständlich eignet sich der Frontbandrechen sowohl für das Bergen von Futter wie Heu oder Gras in unproblematischem Gelände, wie insbesondere in schwierigem Gelände wie beispielsweise bei extremen Hanglagen.

Die Erfindung wird nun beispielsweise und unter Bezug auf die beiden Figuren näher erläutert.

Dabei zeigen:
Fig. 1 eine erfindungsgemässe Vorrichtung mit Frontbandrechen, angeordnet an einem Antrieb eines Motormähers, und
Fig. 2. in Frontdraufsicht eine erfindungsgemässe Vorrichtung mit Frontbandrechen mit entfernter Frontabdeckung.

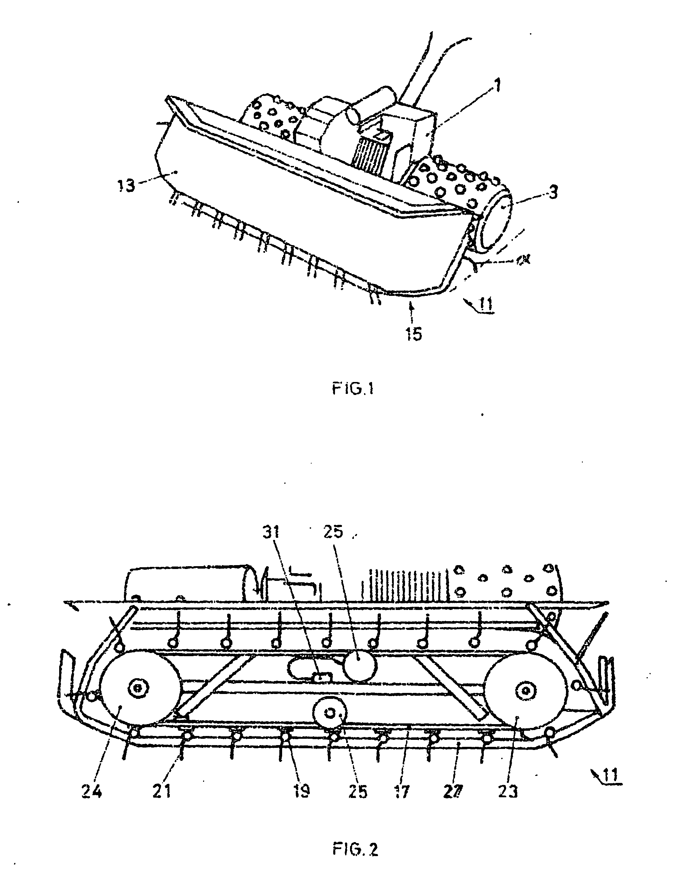

Gemäss Fig. 1 ist an einem herkömmlichen Antrieb 1 geeignet für einen Motormäher, ein Frontbandrechen 11 angeordnet. Der Antrieb weist je seitlich sogenannte Verbreiterungs- oder Stachelwalzen 3 auf, um ein Fahren in schwierigem Gelände wie an abschüssigen Hängen zu ermöglichen. Diese Verbreiterung ist aber nicht zwingend notwendig.

Der Frontbandrechen 11 ist durch eine Frontabdeckung 13 überdeckt, wodurch der darunter angeordnete Antrieb 15 verdeckt ist. Deutlich ist aber in Fig. 1 erkennbar, dass der Frontbandrechen in einem Winkel α von ca. 45° zum Untergrund angeordnet ist, wobei der Winkel zwischen ca. 30°-60° wählbar ist.

Entsprechend zeigt nun Fig. 2 den Frontbandrechen 11 mit entfernter Frontabdeckung, wodurch die erfinderischen Details erkennbar sind. Auf einem umlaufenden Endlosantriebsband 17 sind jeweils am sogenannten Zinkenhalter 19 im Wesentlichen senkrecht nach Außen stehende Zinken 21 angeordnet. Das Antriebs- bzw. Zinkenband 17 wird mittels einer Antriebsrolle 23 angetrieben und über Umlenkrolle 24 umgelenkt. Die zwei Führungsrollen 25 stützen das Zinkenband.

Damit kein Futter oder Heu in die Maschine gezogen werden kann, ist das Antriebsband durch eine Verschalung 27, wie beispielsweise sogenannte Kunststoffleisten, überdeckt, durch welche hindurch die Zinken beispielsweise in Längsschlitzen geführt sind.

Das Zinkenband, welches aus dem Antriebsband, wie beispielsweise einem Keilriemen und den Zinken bestehet, kann nun wie erfindungsgemäss vorgeschlagen in beide Richtungen angetrieben werden, dass heisst sowohl nach links wie auch nach rechts. Dabei erfolgt der Antrieb hydraulisch oder aber auch mechanisch und die Steuerung erfolgt mittels eines Elektroventils 31.

In der Ausführungsvariante wie in Figur 2 dargestellt sind die Zinken ungesteuert am Antriebsband angeordnet, dass heisst sie erstrecken sich auch im Umlenkbereich im Wesentlichen immer senkrecht nach aussen. Bei bekannten Bandrechen erfolgt eine Anwinkelung nach rückwärts im Umlenkbereich.

Der große Vorteil der erfindungsgemäss vorgeschlagenen Vorrichtung besteht darin, dass man immer auf bereits geräumtem Boden fährt und auch in Steillagen immer noch über eine gute Bodenhaftung verfügt. Dass heisst man fährt nie auf dem Futter, kann nach rechts oder links arbeiten und dies bei einer grossen Arbeitsbreite. Mit anderen Worten erfolgt kein Obenherumheuen mehr und durch die zusätzliche Verwendung von beispielsweise Stachelwalzen wird ein optimaler Halt auch in schwierigem Gelände erreicht.

## Patentansprüche

1. Vorrichtung mit einer Antriebsmaschine und einem Frontbandrechen zum Bergen von Gras bzw. Futter, aufweisend ein zur Bewegungsrichtung beim Bergen wenigstens nahezu senkrecht angeordnet umlaufendes Band (17) mit auswärts vorstehenden Zinken (21), **dadurch gekennzeichnet, dass** das Band in beiden Richtungen antreibbar ist, dass das umlaufende Band in einer Ebene angeordnet ist, welche zum Untergrund schwenkbar angeordnet ist in einem in Bearbeitungsrichtung schräg nach vorne unten eingeschlossenen Winkelbereich(α) von ca. 30° bis ca. 60° bezüglich des Untergrundes, dass der Frontbandrechen frontseitig an der Antriebsmaschine (1) angeordnet ist, dass das Band auswärtsgerichtet durch eine leisten- oder plattenartige Verschalung (27) überdeckt ist, welche mit entsprechenden Führungsschlitzen für das hindurchragen der Zinken (21) versehen ist und dass der Antrieb des umlaufenden Bandes hydraulisch erfolgt und die Steuerung rechts/links mittels Elektroventil.

2. Vorrichtung nach Anspruch 1, **dadurch gekennzeichnet, dass** die Bandebene im Betrieb der Vorrichtung vorzugsweise mit einem Winkel(α)von ca. 45° bezüglich des Untergrundes angeordnet ist.

3. Vorrichtung nach einem der Ansprüche 1 der 2, **dadurch gekennzeichnet, dass** die Zinken (21) im Wesentlichen senkrecht vom Band nach aussen vorstehend angeordnet sind.

4. Vorrichtung nach Anspruch 3, **dadurch gekennzeichnet, dass** die Zinken ungesteuert sind.

5. Vorrichtung nach einem der Ansprüche 1-4, **dadurch gekennzeichnet, dass** die Zinken mindestens paarweise angeordnet sind.

6. Verwendung der Vorrichtung bzw. des Landwirtschaftsgerätes nach einem der Ansprüche 1-5 für das Bergen von Heu, Gras, Futter aller Art, etc.

## Claims

1. Device with a drive machine and a front side-delivery hay rake for collecting of grass and forage resp., comprising a circulating belt (17), which is arranged at least almost perpendicular to the direction of motion at the collecting process, the belt having outward projecting teeth (21), **characterized in that** the belt is driveable in both directions, that the circulating belt is arranged within a plane, which is arranged pivotable to the underground, at the bottom inclined in forward view in processing direction with an included angle range (α) from approximately 30° to approximately 60° with respect to the underground, that the front side-delivery rake is arranged at front-side of the drive machine (1), that the belt in outward direction is covered by a rail or plate like formwork (27), which contains respective guiding slots for the protruding through of the teeth (21) and that the drive machine of the circulating belt is hydraulic and the control right/left is executed by means of an electric valve.

2. Device according to claim 1, **characterized in that** the plane of belt in operation of the device is arranged preferably with an angle (α) of approximately 45° in relation to the underground.

3. Device according to one of the claims 1 or 2, **characterized in that** the teeth (21) are arranged essentially projecting perpendicular from the belt in outward direction.

4. Device according to claim 3, **characterized in that** the teeth are uncontrolled.

5. Device according to one of the claims 1 to 4, **characterized in that** the teeth are arranged at least pair wise.

6. Use of the device or the farming device respectively according to one of the claims 1 to 5, for collecting hay, grass, forage of any kind, etc.

## Revendications

1. Dispositif avec un moteur d'entraînement et un râteau-faneur de bande pour abriter de l'herbe ou de la nourriture, respectivement, comprenant une bande (17) circulante qui est arrangée presque de manière verticale à la direction de mouvement d'abriter avec des fourchons (21) saillissant vers l'extérieur, **caractérisé en ce que** la bande pouvant être actionnée en deux directions, que la bande circulante est arrangée dans une plaine, qui est arrangée de manière pivotante par rapport au terrain, en bas de manière penché vers l'avant en direction de traitement une région d'angle (α) inclus d'environ 30° à 60° par rapport au terrain, que le râteau-faneur de bande est arrangé en avant du moteur d'entraînement (1), que la bande est ajustée vers l'extérieur couvert par un revêtement (27) de manière comme une barre ou comme une plaque, qui est dotée des rainures de guidance correspondantes pour faire émerger les fourchons (21) et que le moteur d'entraînement de la bande circulante s'effectue de manière hydraulique et la commande droite/gauche à l'aide d'une soupape électro.

2. Dispositif selon la revendication 1, **caractérisé en ce que** le plan de bande pendant l'opération du dispositif est arrangé préférablement avec un angle (α) d'environ 45° par rapport au terrain.

3. Dispositif selon une des revendications 1 ou 2, **caractérisé en ce que** les fourchons (21) sont arrangés essentiellement de manière verticale de la bande saillissant vers l'extérieur.

4. Dispositif selon la revendication 3, **caractérisé en ce que** les fourchons ne sont pas commandés.

5. Dispositif selon une des revendications 1-4, **caractérisé en ce que** les fourchons sont au moins arrangés par paires.

6. Utilisation du dispositif ou de l'appareil agriculture, respectivement, selon une des revendications 1-5 pour abriter du foin, de l'herbe, de toute sorte de nourriture, etc.
